# EUROPÄISCHE PATENTSCHRIFT

(11) **EP 0 323 488 B1**
(45) Veröffentlichungstag und Bekanntmachung des Hinweises auf die Patenterteilung: **13.10.1993**
(21) Anmeldenummer: 88904924.3
(22) Anmeldetag: 13.06.1988
(51) Int. Cl.: H04L 25/28

(54) **EINRICHTUNG ZUR POTENTIALFREIEN ÜBERTRAGUNG VON DIGITALEN SIGNALEN IN SERIELLEN NETZWERKEN MIT BITWEISER ARBITRIERUNG**
DEVICE FOR POTENTIAL-FREE TRANSMISSION OF DIGITAL SIGNALS IN SERIAL NETWORKS WITH BITWISE ARBITRATION
AGENCEMENT DE TRANSMISSION DE SIGNAUX DIGITAUX INDEPENDANTE DU POTENTIEL DANS UN RESEAU SERIE AVEC ARBITRAGE BIT PAR BIT

(30) Priorität: 07.07.1987 DE 3722415
(43) Veröffentlichungstag der Anmeldung: 12.07.1989
(73) Patentinhaber: ROBERT BOSCH GMBH, 70442 Stuttgart (DE)
(72) Erfinder: BORST, Wolfgang, D-7141 Schwieberdingen (DE); BOTZENHARDT, Wolfgang, D-7141 Schwieberdingen (DE); DAIS, Siegfried, D-7016 Gerlingen (DE); KARE, Otto, D-7000 Stuttgart (DE); KIENCKE, Uwe, D-7140 Ludwigsburg (DE); LITSCHEL, Martin, D-7143 Vaihingen/Enz 2 (DE); LOHNER, Herbert, D-7259 Friolzheim (DE)
(86) Internationale Anmeldenummer: DE8800354
(87) Internationale Veröffentlichungsnummer: WO8900368

(56) Entgegenhaltungen:
- DE-A- 2 821 812
- FR-A- 2 361 780
- US-A- 3 731 002

## Beschreibung

### Stand der Technik

Die Erfindung geht aus von einer Einrichtung zur potentialfreien Übertragung von Informationen nach der Gattung des Hauptanspruchs. Es geht darum, eine ausfalltolerante Busankoppelschaltung mit galvanischer Trennung für ein lokales Multi-Master-Netzwerk mit bitweiser Arbitrierung zu schaffen.
Eine sehr effektive Methode der Busvergabe bei lokalen Multi-Master-Netzwerken ist die bitweise Arbitrierung (z.B. CAN, IIC, DDB).

Multi-Master-Netzwerke mit bitweiser Arbitrierung arbeiten mit den logischen Buspegeln 'dominant' und 'rezessiv'. Zu jedem Zeitpunkt kann der rezessive Buspegel durch das Senden des dominanten Pegels überschrieben werden. Der Buswettstreit wird dadurch entschieden, daß der Sender eines rezessiven Bits bei gleichzeitiger Abtastung eines dominanten Bits den Wettstreit aufgibt und zum Empfänger wird.

Bei diesem Konzept wird der Gleichanteil der Signale mit über die Leitung übertragen.

Beispiele für diese logischen Bitpegel sind:

| 'dominant' | 'rezessiv' |
|---|---|
| niederohmig | hochohmig |
| Licht an | Licht aus |
| Spannung | keine Spannung |
| Energie | keine Energie |

Stand der Technik ist, daß bei Netzwerken mit bitweiser Arbitrierung zur galvanischen Entkopplung der einzelnen Teilnehmerstationen zumindest auf der Senderseite optoelektrische Bauelemente eingesetzt werden müssen, da diese den Gleichanteil mitübertragen können :
- Optokoppler zur Ankopplung an einen Bus mit elektr. Leitung
- Optische Sender und Empfänger an einen Lichtwellenleiter-Bus mit Sternkoppler
Dabei sind Optokoppler Bauelemente mit relativ hoher Ausfallrate, die bei extremen Temperaturen oder bei schnellen Temperaturwechseln nicht eingesetzt werden können.

Für das Zielnetzwerk kommen wegen der geforderten Buspegel 'dominant' und 'rezessiv' nur Optokoppler mit Offenen-Kollektor-Ausgängen in Betracht. Beim Durchlegieren dieses Ausgangstransistors wird der Buspegel 'dominant' erzeugt und das gesamte Netzwerk ist entgegen der Zielsetzung blockiert.

Optische Sender und Empfänger am Lichtwellenleiter mit Sternkoppler sind für den Einsatz in Kfz-Netzwerken zu teuer und zu unzuverlässig.

Die Einschränkungen bei der Handhabung von Lichtleitern und optischen Steckkontakten lassen z.Zt. einen Einsatz unter extremen Bedingungen (wie z.B. im Kraftfahrzeug) nicht zu.

Wird beim Ausfall eines Treibers des Sendeelements dauernd Licht erzeugt ('dominant'), so ist das gesamte Netzwerk blockiert. Beim Ausfall des Sternkopplers ist das Netzwerk ebenfalls blockiert.

Aus der DE-OA-28 21 812 ist eine Schaltungsanordnung zur potentialgetrennten Übertragung digitaler und analoger Signale bekannt. Dabei wird ein Transformator als galvanische Trenneinrichtung verwendet. Die zu übertragenden Signale werden von einem Modulator moduliert, dem Transformator zugeführt und ausgangsseitig mit Hilfe eines Gleichrichters demoduliert und anschließend einer Filterschaltung zugeführt. Dem Modulator wird ein Taktsignal von einem HF-Oszillator an seinen Eingängen und das zu übertragende Signal an seinen Versorgungsspannungseingängen zugeführt. Der Modulator schaltet die an seinen Betriebsspannungseingängen anliegende Spannung im Takt des zugeführten Taktsignales wechselseitig auf seine beiden Ausgangsklemmen. Voraussetzung für die ordnungsgemäße Funktionsweise der Schaltungsanordnung ist, daß die Frequenz des zu übertragenden Signals wesentlich kleiner als die Frequenz des HF-Oszillators sein muß.

Aufgabe der Erfindung ist es, eine Einrichtung zur potentialfreien Übertragung von Informationen zu schaffen, die beim Ausfall einer Station die Übertragungsstrecke nicht blockiert, zuverlässig und preisgünstig mit Blick auf ihren mengenmäßig großen Einsatz, insbesondere im Kraftfahrzeug-Bereich, ist. Die genannte Aufgabe wird durch die Merkmale des Anspruchs 1 gelöst.

### Vorteile der Erfindung

Die erfindungsgemäße Einrichtung zur potentialfreien Übertragung von digitalen Signalen in seriellen Netzwerken mit bitweiser Arbitrierung hat demgegenüber den Vorteil, daß das dem Modulator zugeführte Taktsignal die gleiche Frequenz wie das Bittaktsignal besitzt. Dadurch wird eine hohe Übertragungsrate bei der Übertragung digitaler Signale erreicht. Eine zusätzliche Oszillatorschaltung mit nachgeschalteten Mitteln zur Taktsignalaufbereitung kann entfallen. Weiterhin vorteilhaft ist es, daß auch eine Filterschaltung zur Glättung von Störspitzen entfallen kann, weil die z.B. durch Streuinduktivitäten der glavanischen Trenneinrichtung erzeugten Störspitzen nur noch an den beiden Flanken eines zu übertragenden Bits auftreten. Die Einrichtung ist sehr zuverlässig und preisgünstig, so daß sie z.B. im Kraftfahrzeug eingesetzt werden kann.

Durch die in den Unteransprüchen aufgeführten Maßnahmen sind vorteilhafte Weiterbildungen und Verbesserungen der im Hauptanspruch angegebenen Einrichtung möglich. So ist es vorteilhaft, daß in die beiden Eingangspole der Trenneinrichtung mehr als ein Eingangssignalpaar münden (lokales Netzwerk). Dadurch ist es möglich, daß mehrere Teilnehmer die Einrichtung zur potentialfreien Übertragung von Informationen gemeinsam benutzen können.

Ebenfalls vorteilhaft ist es, daß als galvanische Trenneinrichtung ein Tranformator mit Mittelanzapfung verwendet wird. Dadurch wird erreicht, daß man sekundärseitig zwei Dioden für den Gleichrichter einsparen kann und primärseitig auf die teuren Push-Pull-Treiber verzichten kann und stattdessen FET-Treiber oder Bipolar-Treiber einsetzen kann.

Weiterhin vorteilhaft ist es, als galvanische Trenneinrichtung ein Kondensator-Vierpol zu verwenden. Dadurch wird der Platzbedarf und die Masse der Einrichtung reduziert.

### Zeichnung

Ausführungsbeispiele der Erfindung sind in der Zeichnung dargestellt und werden im folgenden näher beschrieben. Es zeigen
- Figur 1: ein grobes Blockschaltbild der Einrichtung in Verbindung mit einer Anwendung in einem globalen Netzwerk, z.B. im Kfz.
- Figur 2: ein Zeitdiagramm zur Funktionsweise der Einrichtung
- Figur 3: zwei Möglichkeiten eines Modulators
- Figur 4: Beispiele für Treiberschaltungen
- Figur 5: Möglichkeit eines lokalen Netzwerks
- Figur 6: Beispiele der galvanischen Trennung
- Figur 7: Schaltungsanordnungen zur Demodulation
- Figur 8: Schaltungsanordnung für ein Busankopplungs-Netzwerk
- Figur 9 und 10: zwei Gesamtdarstellungen

### Beschreibung der Ausführungsbeispiele

### a) Bussystem

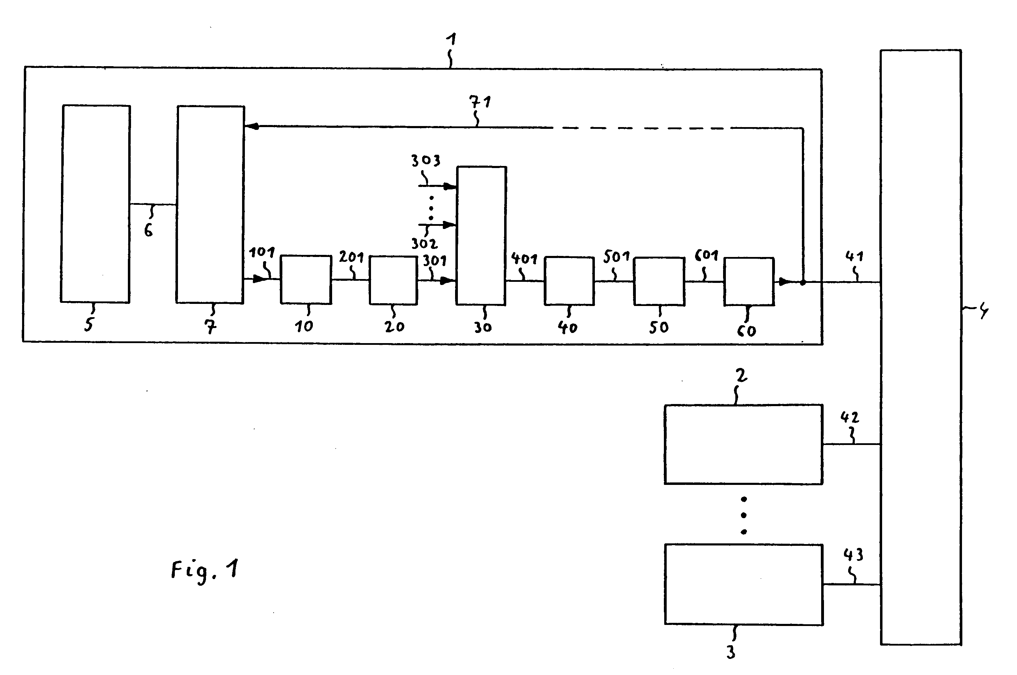

Figur 1 zeigt das Blockschaltbild des Bussystems

Es besteht aus globalen Busstationen 1, 2, 3 und einem globalen Netzwerk 4. Die Busstationen 1, 2, 3 sind über die Leitungen 41, 42, 43 an das globale Netzwerk 4 angeschlossen. Jede Busstation besteht aus Modulator 10, Treiber 20, lokalem Netzwerk 30, galvanischer Trennung 40, Demodulator 50 und Busankopplungs-Netzwerk 60.
Das zu übertragende Signal wird von einem Interface-Block 7 generiert und steht an Leitung 101 zur Verfügung. Der Interface-Block 7 verarbeitet auch das Empfangssignal, das evtl. modifiziert durch weitere Blöcke an Leitung 71 vorliegt.

### b) Beschreibung des Blockschaltbildes einer Busstation (am Beispiel der Busstation 1)

Das zu übertragende Signal wird über die Leitungen 101 vom Interface-Block 7 an den Modulator 10 geführt. Dieser erzeugt aus dem gleichanteilbehafteten Sendesignal ein gleichanteilfreies Zwischensignal. Die Ausgänge des Modulators 10 werden über die Leitungen 201 an die Eingänge des Treibers 20 geführt. Die Ausgänge des Treibers 20 gelangen über die Leitungen 301 an die Eingänge des lokalen Netzes 30. Dieses kann noch weitere Eingänge 302 und 303 besitzen, um weitere Interface-Blocks und Anwendungs-Schaltungen über Modulator und Treiber miteinander zu verkoppeln. Die Ausgänge des lokalen Netzes 30 werden über die Leitungen 401 an die Eingänge der galvanischen Trennung 40 geführt. Die Ausgänge der galvanischen Trennung 40 werden über die Leitungen 501 an die Eingänge des Demodulators 50 gelegt. Hier wird aus dem gleichanteilfreien, galvanisch entkoppelten Zwischensignal wieder ein gleichanteilbehaftetes Signal generiert. Die Ausgänge des Demodulators 50 kommen über die Leitungen 601 auf die Eingänge des Busankopplungs-Netzwerks 60. Die Ausgänge des Busankopplungs-Netzwerks 60 werden über die Leitungen 41 an die Eingänge des globalen Netzwerks 4 angeschlossen, außerdem wird von hier das Empfangssignal, evtl. über weitere Blöcke, über die Leitungen 71 zum Interface-Block 7 zurückgeführt. Dieser setzt aus den gelesenen Bits die übertragene Information zusammen und leitet diese an die Anwendungs-Schaltung 5 weiter. Mit dem globalen Netzwerk 4 können viele Busteilnehmer auch über größere Strecken verbunden sein.

Das lokale Netz 30 kann auch entfallen. Dann werden die Ausgänge 301 des Treibers 20 direkt an die Eingänge 401 der galvanischen Trennung 40 angeschlossen.

Modulator 10 und Treiber 20 können auch im Interface-Block kostengünstig integriert werden. Deshalb sind diese auch unmittelbar mit dem Interface-Block verbunden.

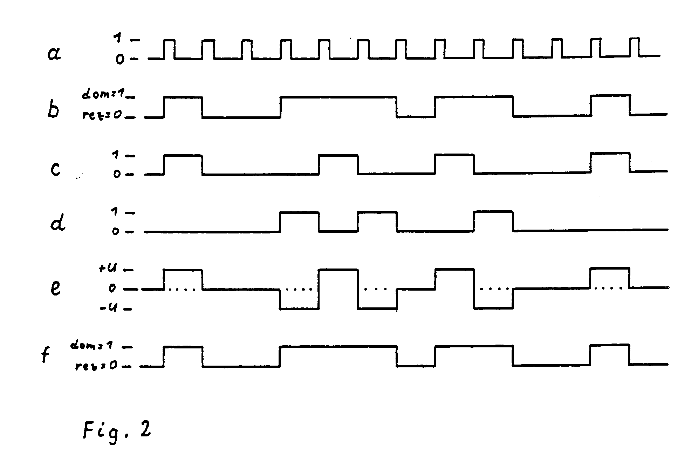

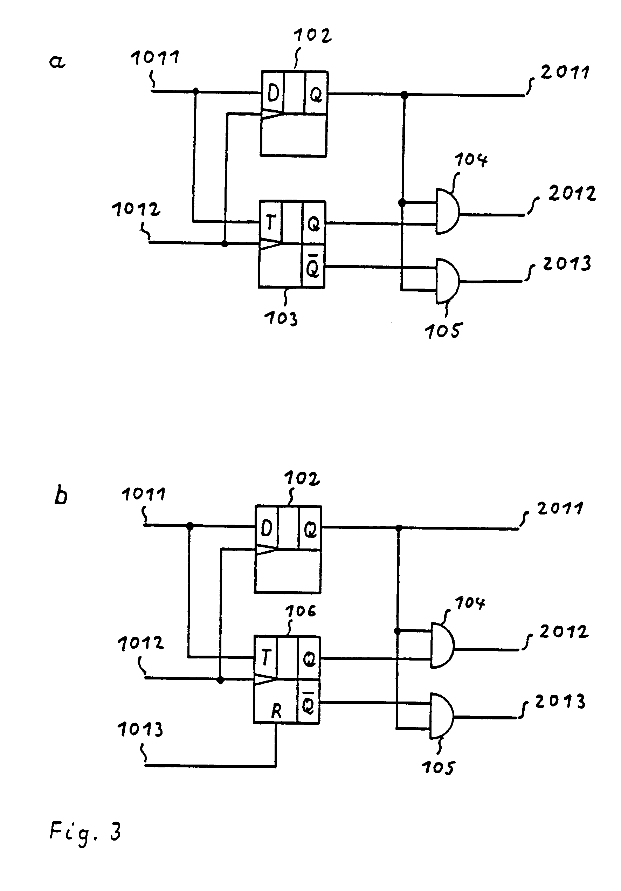

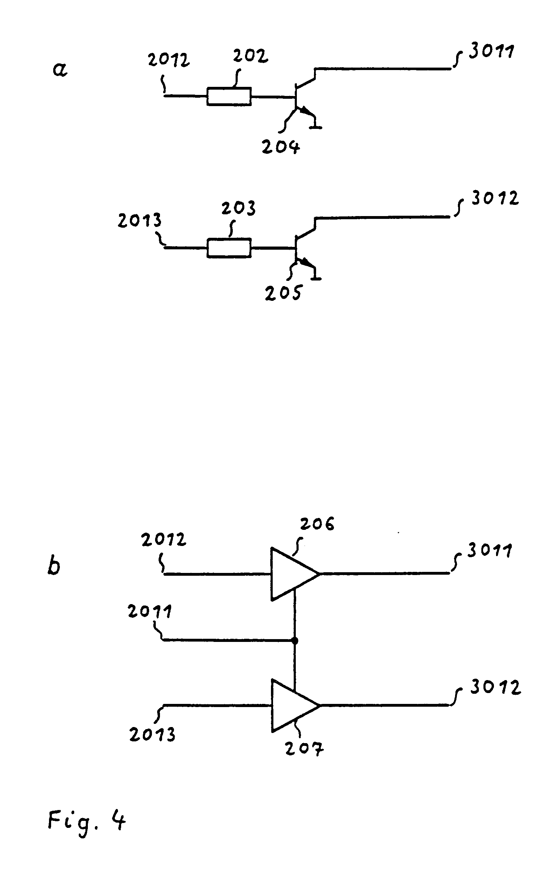

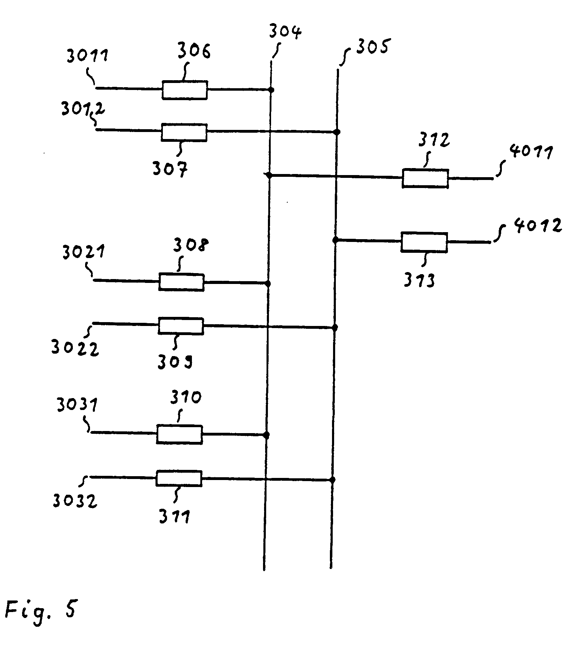

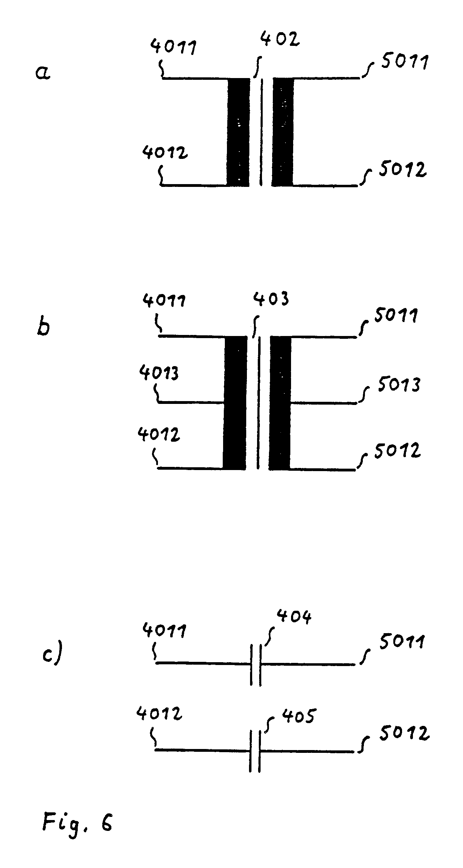

In Figur 2 ist ein Beispiel für die Funktionsweise anhand eines Zeitdiagramms dargestellt. Figur 2a zeigt die Taktfrequenz mit der der ankommende Bitstrom gerastert ist. Das zu übertragende Signal ist in Figur 2b dargestellt. Änderungen des Bitpegels sind jeweils nur im Raster der Taktfrequenz möglich. Das zu übertragende Signal wird durch den Modulator in zwei Zwischensignale Figur 2c und Figur 2d umgewandelt, die zur Ansteuerung eines galvanischen Trenngliedes dienen. Diese Zwischensignale nach Figur 2c und Figur 2d sind beim Senden eines rezessiven Bits beide auf logisch '0', beim Senden eines dominanten Bits dagegen alternierend auf logisch '1'. Figur 2e zeigt das Signal nach der galvanischen Trennung. Hier ergibt sich bei einem dominanten Bit eine positive oder negative Spannung, bei einem rezessiven Bit dagegen keine Spannung. Nach der Demodulation erhält man wieder den ursprünglichen Signalverlauf, wie in Figur 2f dargestellt ist. Das Ergebnis ist ein potentialgetrenntes Signal, das in seinem Verlauf dem Originalsignal Figur 2b entspricht.

Nachfolgend sind Ausführungsbeispiele der einzelnen Blöcke des Blockschaltbildes nach Figur 1 näher beschrieben.

### c) Modulator

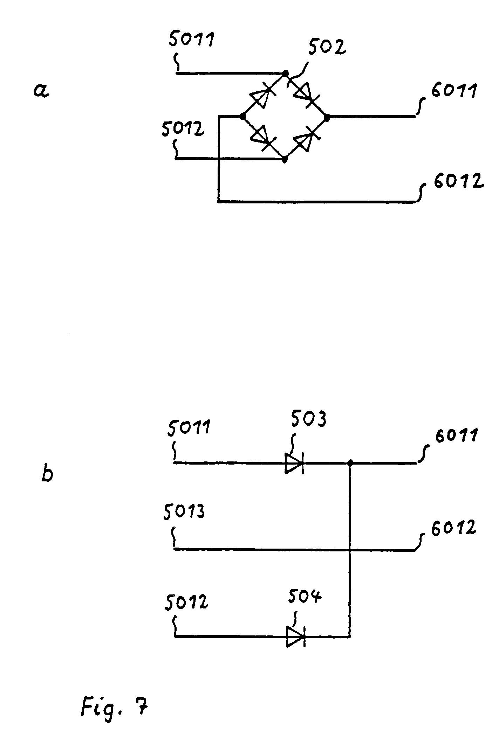

Die Figuren 3a und 3b zeigen zwei Ausführungsbeispiele für den Modulator 10.

Der Modulator 10 hat die Aufgabe das zu übertragende Signal zum Anschluß eines galvanischen Trenngliedes aufzubereiten. Hierzu wird das Sendesignal mit dem Modulatortakt beaufschlagt. Dieser kann zweckmäßigerweise die gleiche Frequenz wie der Bittakt selbst, oder aber eine höhere Frequenz haben.
Es besteht die Möglichkeit den Modulator frei laufen zu lassen, oder diesen zu synchronisieren. z.B. die Modulatoren aller Busteilnehmer zu Beginn jeder Übertragung in gleicher Weise zu starten. Durch eine Synchronisierung ist gewährleistet, daß das Zwischensignal aller Busteilnehmer in gleicher Phase ist. Dies ist notwendig, wenn das Zwischensignal mehrerer Teilnehmer im lokalen Netz 30 verkoppelt wird.

Figur 3a zeigt ein Ausführungsbeispiel eines unsynchronisierten Modulators.

Das Sendesignal liegt an der Eingangsleitung 1011 und wird auf den D-Eingang eines D-Flip-Flops 102 sowie an den T-Eingang eines Toggle-Flip-Flops 103 gefuhrt. Der Modulatortakt gelangt über die Eingangsleitung 1012 auf die Takteingänge der beiden Flip-Flops 102 und 103. Der Q-Ausgang des D-Flip-Flops 102 wird an je einen Eingang der logischen UND-Gatter 104 und 105 gelegt, und führt auch auf die Ausgangsleitung 2011. Der Q-Ausgang des Toggle-Flip-Flops 103 wird an den zweiten Eingang des UND-Gatter 104 gelegt, der Qquer-Ausgäng wird an den zweiten Eingang des UND-Gatters 105 gelegt. Die Ausgange der ND-Gatter 104 und 105 bilden die Ausgangsleitungen 2012 und 2013.

### Funktion :

Das D-Flip-Flop 102 und das Toggle-Flip-Flop 103 werden mit dem Modulatortakt getaktet; an den D- bzw. T-Eingängen der beiden Flip-Flops liegt das Sendesignal. Dabei sei der 'dominante' Pegel eine logische '1', der 'rezessive' Pegel eine logische '0'. Das D-Flip-Flop 102 synchronisiert das Sendesignal auf den Modulatortakt.
Das Toggle-Flip-Flop 103 kippt bei einem 'dominanten' Sendesignal mit jeder Taktflanke, so daß seine Q- und Qquer-Ausgänge mit jedem Takt die Polarität wechseln. Durch die UND-Verknüpfung der Q- und Qquer-Ausgänge des Toggle-Flip-Flops mit dem synchronisierten Sendesignal erreicht man, daß die Ausgangsleitungen 2012 und 2013 beim Senden eines 'rezessiven' Bits beide auf logisch '0', beim Senden eines 'dominanten' Bits jedoch im Modulatortakt wechselseitig auf logisch '0' und logisch '1' liegen.

Figur 3b zeigt ein Ausführungsbeispiel eines synchronisierten Modulators.

Im Gegensatz zum unsynchronisierten Modulator nach Figur 3a wird hier das Toggle-Flip-Flop durch ein Synchronisationssignal zurückgesetzt. Dazu wird das Synchronisationssignal über die Leitung 1013 an den 'Reset'-Eingang des Toggle-Flip-Flops 106 gelegt. Das Synchronisationssignal kann z.B. ein kurzer Impuls beim Beginn einer neuen Botschaft sein.
Die Ausgänge dieses Modulators verhalten sich logisch ebenso wie beim unsynchronisierten Modulator, zusätzlich ist hier allerdings die Phasenlage der Modulatorausgänge 2012 und 2013 in Bezug auf alle anderen, auch synchronisierten Modulatorausgänge, die an das lokale Netz 30 angeschlossen sind, definiert.

### d) Treiber

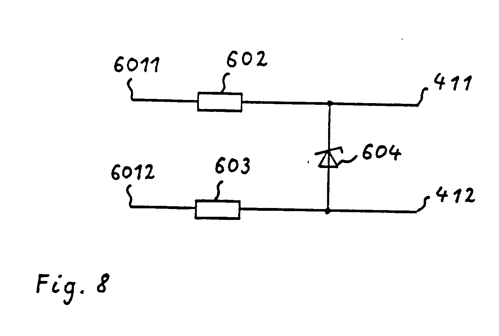

Die Figuren 4a und 4b zeigen Ausführungsbeispiele für einen Offenen-Kollektor-Treiber und für einen Push-Pull-Treiber. Ein solcher Push-Pull-Treiber ist z.B. unter der Bezeichnung SN74126 bei der Firma TEXAS INSTRUMENTS erhältlich.
Welche Treiberart eingesetzt wird, hängt von der Ausführung der galvanischen Trennung ab. Bei Verwendung eines Übertragers mit Mittelanzapfung auf der Primärseite wird z.B. ein Offener-Kollektor-Treiber eingesetzt, bei einem Übertrager ohne Mittelanzapfung auf der Primärseite wird ein Push-Pull-Treiber verwendet.

Figur 4a zeigt ein Ausführungsbeispiel eines Offenen-Kollektor-Treibers.

Dabei werden die vom Modulator kommenden Eingangssignale 2012 und 2013 über die Widerstände 202 und 203 an die Basisanschlüsse der NPN- Transistoren 204 und 205 geführt. Die Emitteranschlüsse der Transistoren 204 und 205 liegen auf Massepotential. Die Kollektoranschlüsse sind mit den Ausgangsleitungen 3011 und 3012 verbunden. An ihnen kann das verstärkte Signal abgenommen werden.

Figur 4b zeigt ein Ausführungsbeispiel eines Push-Pull-Treibers.

Hier werden die vom Modulator kommenden Eingangssignale 2012 und 2013 an die Signaleingänge zweier Push-Pull-Treiber 206 und 207 gelegt. Über die Leitung 2011, an welcher das auf den Modulatortakt synchronisierte Sendesignal anliegt, können die Treiber hochohmig geschaltet werden. Die Ausgänge der beiden Push-Pull-Treiber 206 und 207 werden auf die Ausgangsleitungen 3011 und 3012 geführt.

### e) Lokales Netz

Figur 5 zeigt ein Ausführungsbeispiel für ein passives lokales Netzwerk 30.

Die Treiberausgänge (3011, 3012), bzw. (3021, 3022) und (3031, 3032) der einzelnen lokalen Stationen werden gleichsinnig über Widerstände 306...311 an die lokalen Busleitungen 304 und 305 angeschlossen. Über die Widerstände 312 und 313 werden die Ausgänge 4011 und 4012 ebenfalls an die Busleitungen 304 und 305 angeschlossen. Die Widerstände 306...311 bzw. 312, 313 können wahlweise entfallen.

### f) Galvanische Trennung

Die Figuren 6a bis 6c zeigen einige Ausführungsbeispiele für die galvanische Trennung 40.
Die Figuren 6a und 6b zeigen zwei Ausführungen der galvanischen Trennung mittels Übertrager, während in Figur 6c eine galvanische Trennung mit Kondensatoren dargestellt ist.

In Figur 6a ist zur galvanischen Trennung ein Übertrager 402 mit einfacher Primär- und Sekundärwicklung dargestellt. Dabei sind die Eingangsleitungen 4011 und 4012 an die Primärwicklung des Übertragers angeschlossen, während die Sekundärwicklung mit den Ausgangsleitungen 5011 und 5012 verbunden ist.

In Figur 6b ist zur galvanischen Trennung ein Übertrager 403 mit Mittelanzapfung auf der Primär- und Sekundärwicklung dargestellt. Die Eingangsleitungen 4011 und 4012 sind an die äußeren Anschlüsse der Primärwicklung gelegt, die Eingangsleitung 4013 an deren Mittelänzapfung. Die äußeren Anschlüsse der Sekundärwicklung sind mit den Ausgangsleitungen 5011 und 5012 verbunden, die Mittelanzapfung mit der Ausgangsleitung 5013.

Bei der galvanischen Trennung nach den Figuren 6a und 6b werden Gleichtaktstörungen, die auf der Busleitung auftreten können, durch den Übertrager gesperrt. Sie können nicht auf die Primärseite des Übertragers gelangen.

In Figur 6c sind zur galvanischen Trennung zwei Kondensatoren eingesetzt. Die Eingangsleitungen 4011 und 4012 sind dabei jeweils über die beiden Kondensatoren 404 und 405 mit den Ausgangsleitungen 5011 und 5012 verbunden.

### g) Demodulator

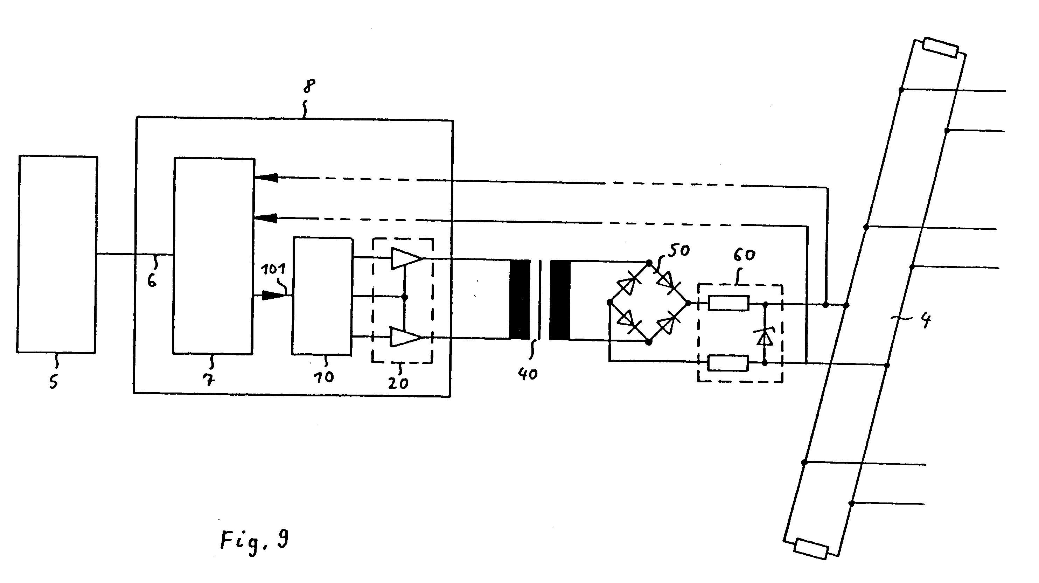

Die Figuren 7a und 7b zeigen zwei Ausführungsbeispiele für den Demodulator 50.

Figur 7a zeigt eine Graetz-Gleichrichtung. Die Eingangsleitungen 5011 und 5012 werden an die Ausgänge der galvanischen Trennung 40 angeschlossen. An den Ausgängen 6011 und 6012 des Graetz-Gleichrichters 502 steht das demodulierte Signal zur Verfügung.

Figur 7b zeigt einen Demodulator der vorzugsweise an den Ausgang eines Übertragers mit einer Mittelanzapfung auf der Sekundärseite angeschlossen wird. Hier sind die Eingangsleitungen 5011 und 5012 über die Dioden 503 und 504 mit der Ausgangsleitung 6011 verbunden. Die Eingangsleitung 5013 gelangt direkt zur Ausgangsleitung 6012.

### h) Busankopplungs-Netzwerk

Figur 8 zeigt ein Ausführungsbeispiel für das Busankopplungs-Netzwerk 60.
Die Eingangsleitungen 6011 und 6012 werden über die Widerstände 602 und 603 an die Ausgangsleitungen 411 und 412 gelegt. Zwischen die Ausgangsleitungen 411 und 412 kann eine Zenerdiode 604 geschaltet werden.
Diese Diode verhindert, daß extreme Buspegel außerhalb des Nutzsignalbereichs auftreten können. Damit werden zum einen differentielle Busstörungen gekappt, außerdem werden Reflexionen auf der Busleitung, die aufgrund von Fehlabschlüssen entstehen können, gedämpft.

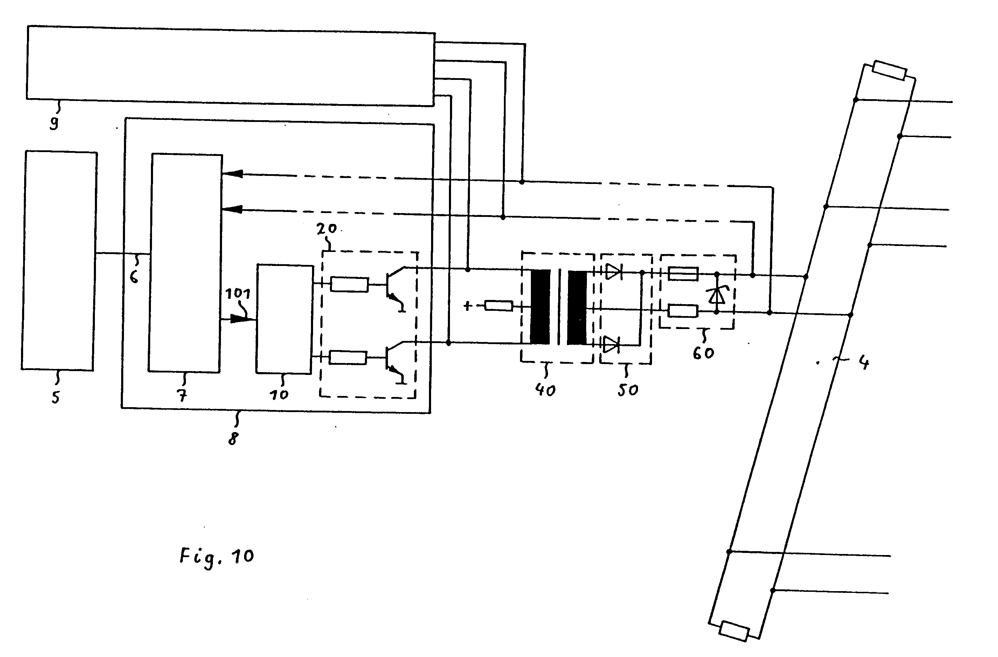

Die Figuren 9 und 10 zeigen zwei Ausführungsbeispiele eines Bussystems. Dabei ist ein Teil der Blöcke in einem Interface-Baustein 8 mit integriert (z.B. CAN-Controller-Baustein). So sind nur wenige externe Bauelemente nötig, was eine kostengünstige Realisierung ermöglicht.

In Figur 9 ist ein Ausführungsbeispiel eines Bussystems mit galvanischer Entkopplung mit Übertrager nach Figur 6a und nachfolgender Graetz-Gleichrichtung nach Figur 7a dargestellt. Der Modulator nach Figur 3a und der Treiber nach Figur 4b sind dabei in einem Interface-Baustein 8 integriert.

### Vorteile der Anordnung nach Figur 9:

- Gleichtaktstörungen auf der Busleitung können kein Differenzsignal auf der Sekundärseite des Übertragers bewirken, d.h. daß ihre Auswirkungen nicht auf die Primärseite des Übertragers und an den Interface-Baustein 8 gelangen können.
- Positive Differenzstörungen auf der Busleitung bleiben Senderseitig ohne Auswirkung, da alle Dioden des Gleichrichters sperren.
- Negative Differenzstörungen bewirken kein Differenzsignal am Übertrager, da alle Dioden des Graetz-Gleichrichters leitend werden und somit beide Anschlüsse der Sekundärwicklung auf gleichem Potential liegen.
- Beim Ausfall eines oder beider Treiber oder bei primär- oder sekundärseitigem Windungsschluß des Übertragers wird der restliche Busverkehr auf der Busleitung nicht beeinträchtigt, da der Bus durch den Gleichrichter entkoppelt ist.

In Figur 10 ist ein Ausführungsbeispiel eines Bussystems mit galvanischer Entkopplung mit Übertrager mit Mittelanzapfungen auf Primär- und Sekundärseite nach Figur 6b und anschließender Zweiweg-Gleichrichtung nach Figur 7b. Der Modulator nach Figur 3a und der Treiber nach Figur 4a sind dabei in einem Interface-Baustein 8 integriert. Als Ausführungbeispiel für ein lokales Netz ist noch der Block 9 angeschlossen, der äquivalente Blöcke zu 5 und 8 enthält.

### Vorteile der Anordnung nach Figur 10:

- Gleichtaktstörungen auf der Busleitung können kein Differenzsignal auf der Sekundärseite des Übertragers bewirken, d.h. daß ihre Auswirkungen nicht auf die Primärseite des Übertragers gelangen können.
- Positive Differenzstörungen auf der Busleitung bleiben Senderseitig ohne Auswirkung, da alle Dioden des Gleichrichters sperren.
- Negative Differenzstörungen bewirken kein Differenzsignal am Übertrager, da in der Sekundärwicklung zwei Ströme gleicher Größe in entgegengesetzter Richtung fließen.
- Beim Ausfall eines oder beider Treiber oder bei primär- oder sekundärseitigem Windungsschluß des Übertragers wird der restliche Busverkehr auf der Busleitung nicht beeinträchtigt, da der Bus durch den Gleichrichter entkoppelt ist.
- Bei Vorliegen mehrerer lokaler Stationen wird die Trenneinrichtung und der Demodulator nur einmal benötigt, was eine besonders preisgünstige Lösung ermöglicht.

## Patentansprüche

1. Einrichtung zur potentialfreien Übertragung von digitalen Signalen in seriellen Netzwerken mit bitweiser Arbitrierung, wobei die Übertragungszeiten der digitalen Signale durch ein Bittaktsignal bestimmt sind, mit einem Modulator, dem ein weiteres Taktsignal zugeführt ist, der das Eingangssignal in äquidistanten Zeiten abtastet und der den dominanten Signalanteil zu äquidistanten Zeiten alternierend auf zwei Signalleitungen schaltet, wobei die beiden Signalleitungen zwei Eingangspolen einer galvanischen Trenneinrichtung zugeordnet sind und ausgangsseitig der Trenneinrichtung eine Demodulation erfolgt` dadurch gekennzeichnet, daß die Einrichtung derart ausgestaltet ist, daß das dem Modulator (10) zugeführte Taktsignal die gleiche Frequenz wie das Bittaktsignal besitzt.

2. Einrichtung nach Anspruch 1, dadurch gekennzeichnet, daß die Trenneinrichtung ein Transformator mit wenigstens zwei Eingangsanschlüssen ist.

3. Einrichtung nach einem der Ansprüche 1 oder 2, dadurch gekennzeichnet, daß in die beiden Eingangspole der Trenneinrichtung mehr als ein Eingangssignalpaar münden (lokales Netzwerk).

4. Einrichtung nach einem der Ansprüche 1 bis 3, dadurch gekennzeichnet, daß in die Signalleitungen zu der Trenneinrichtung Tristate-Treiber geschaltet sind.

5. Einrichtung nach einem der Ansprüche 1 bis 3, dadurch gekennzeichnet, daß in die Signalleitungen zu der Trenneinrichtung Transistoren mit Offenen-Kollektor-Ausgängen geschaltet sind.

6. Einrichtung nach Anspruch 1, dadurch gekennzeichnet, daß der Modulator funktionsmäßig ein D-Flip-Flop und ein T-Flip-Flop aufweist, das zu übertragende Signal den Signaleingängen der beiden Flip-Flops zugeführt wird, ihre beiden Takteingänge den Abtasttakt erhalten und ausgangsseitig zwei UND-Gatter vorgesehen sind, von denen jeweils ein Eingang dem Ausgang des D-Flip-Flops und die anderen Eingänge den beiden Ausgängen (Q,Qquer) des T-Flip-Flops zugeordnet sind.

7. Einrichtung nach Anspruch 1, dadurch gekennzeichnet, daß als Demodulator ein Mehrweg-Gleichrichter, insbesondere ein Zweiweg-oder Brücken-Gleichrichter vorgesehen ist.

8. Einrichtung nach Anspruch 7, dadurch gekennzeichnet, daß ausgangsseitig ein spannungsabhängiges Element, insbesondere eine Zenerdiode, angeordnet ist.

9. Einrichtung nach Anspruch 1, dadurch gekennzeichnet, daß als Trenneinrichtung ein Transformator mit Mittelanzapfung verwendet wird.

10. Einrichtung nach Anspruch 1, dadurch gekennzeichnet, daß als Trenneinrichtung ein Kondensator-Vierpol verwendet wird.

11. Verwendung einer Einrichtung nach einem der vorhergehenden Ansprüche in Kraftfahrzeug-Bordnetzsystemen.

## Claims

1. Device for the potential-free transmission of digital signals in serial networks with bit-by-bit arbitration, the transmission times of the digital signals being determined by a bit clock signal, with a modulator, to which a further clock signal is fed and which samples the input signal at equidistant times and switches the dominant signal component at equidistant times alternately to two signal lines, the two signal lines being assigned to two input poles of a galvanic separating device, and a demodulation taking place on the output side of the separating device, characterized in that the device is designed in such a way that the clock signal fed to the modulator (10) has the same frequency as the bit clock signal.

2. Device according to Claim 1, characterised in that the separating device is a transformer with at least two input terminals.

3. Device according to one of Claims 1 or 2, characterized in that more than one pair of input signals open into the two input poles of the separating device (local network).

4. Device according to one of Claims 1 to 3, characterized in that tristate drivers are connected into the signal lines to the separating device.

5. Device according to one of Claims 1 to 3, characterised in that transistors with open-collector outputs are connected into the signal lines to the separating device.

6. Device according to Claim 1, characterised in that the modulator functionally has a delay flipflop and a trigger flipflop, the signal to be transmitted is fed to the signal inputs of the two flipflops, their two clock inputs receive the sampling clock and, on the output side, two AND gates are provided, of which in each case one input is assigned to the output of the delay flipflop and the other inputs are assigned to the two outputs (Q, Qquer) of the trigger flipflop.

7. Device according to Claim 1, characterized in that a multiway rectifier, in particular a double-way or bridge rectifier, is provided as the demodulator.

8. Device according to Claim 7, characterized in that a voltage-dependent element, in particular a Zener diode, is arranged on the output side.

9. Device according to Claim 1, characterised in that a transformer with centre tap is used as the separating device.

10. Device according to Claim 1, characterized in that a capacitor quadripole network is used as the separating device.

11. Use of a device according to one of the preceding claims in motor vehicle on-board systems.

## Revendications

1. Dispositif pour la transmission indépendante du potentiel de signaux numériques dans des réseaux en série avec arbitrage bit par bit, les instants de transmission des signaux numériques sont déterminés par un signal de rythme numérique, avec un modulateur, auquel est envoyé un autre signal de synchronisation, qui balaie le signal d'entrée à intervalles égaux et qui branche la fraction dominante du signal à intervalles de temps égaux de façon alternative sur deux lignes de signaux, les deux lignes de signaux étant associées à deux pôles d'entrée d'un dispositif de circuit de déconnexion galvanique et une démodulation ayant lieu du côté sortie du dispositif de déconnexion, dispositif caractérisé en ce qu'il est constitué de telle façon que le signal de synchronisation envoyé au modulateur (10) possède la même fréquence que le signal de rythme numérique.

2. Dispositif selon la revendication 1, caractérisé en ce que le dispositif de déconnexion est un transformateur avec au moins deux raccords d'entrée.

3. Dispositif selon l'une des revendications 1 ou 2, caractérisé en ce que dans les deux pôles d'entrée du dispositif de déconnexion débouche plus d'une paire de signaux d'entrée (réseau local).

4. Dispositif selon l'une des revendications 1 à 3, caractérisé en ce que dans les lignes de signaux allant au dispositif de déconnexion sont branchés des circuits d'attaque "tristate".

5. Dispositif selon l'une des revendications 1 à 3, caractérisé en ce que dans les lignes de signaux allant au dispositif de déconnexion sont branchées des transistors avec des sorties collecteur ouvertes.

6. Dispositif selon la revendication 1, caractérisé en ce que le modulateur présente un bascule D et une bascule T, que le signal à transmettre est envoyé aux entrés de signaux des deux bascules leurs deux entrées reçoivent le signal de balayage et en ce qu'il est prévu du côté sortie deux portes ET, dont respectivement une entrée est associée à la sortie de la bascule D et les autres entrées sont associées aux deux sorties (Q transversal) de la bascule.

7. Dispositif selon la revendication 1, caractérisé en ce qu'il est prévu comme démodulateur un redresseur à plusieurs voies, en particulier un redresseur à deux voies ou un redresseur à pont.

8. Dispositif selon la revendication 7, caractérisé en ce que du ôté sortie est disposé un élément dépendant de la tension, en particulier une diode de Zener.

9. Dispositif selon la revendication 1, caractérisé en ce que l'on utilise comme dispositif de déconnexion un transformateur avec prise médiane.

10. Dispositif selon la revendication 1, caractérisé en ce que l'on utilise comme dispositif de déconnexion un quadripôle à condensation.

11. Utilisation d'un dispositif selon l'une des revendication précédentes dans un système de réseau de bord de véhicule automobile.
